# FASCICULE DE BREVET EUROPEEN

(11) **EP 1 867 918 B1**
(45) Date de publication et mention de la délivrance du brevet: **05.01.2011**
(21) Numéro de dépôt: 07290667.0
(22) Date de dépôt: 25.05.2007
(51) Int. Cl.: F21V 17/00

(54) **Projecteur comportant un élément de support rapporté fixe sur lequel un réflecteur est monté pivotant**
Scheinwerfer, der ein feststehendes, aufgesetztes Halterungselement umfasst, auf dem ein Scheinwerfer schwenkbar montiert ist
Headlight comprising a fixed offset support element on which a reflector is mounted and able to pivot

(30) Priorité: 15.06.2006 FR 0605363
(43) Date de publication de la demande: 19.12.2007
(73) Titulaire: VALEO VISION, 93012 Bobigny Cedex (FR)
(72) Inventeur: Maliar, Rémi, 59880 Saint Saulve (FR); Herbin, Cyril, 59530 Potelle (FR)

(56) Documents cités:
- EP-A- 1 342 618
- EP-A1- 1 150 065
- EP-A2- 1 050 433
- DE-C- 632 214
- FR-A1- 2 757 250
- GB-A- 2 170 587

## Description

L'invention concerne un projecteur de véhicule automobile qui comporte un boîtier dans lequel sont montés une source lumineuse fixe et un réflecteur pivotant.

L'invention concerne plus particulièrement un projecteur de véhicule automobile qui est susceptible d'émettre au moins un faisceau lumineux selon un axe globalement longitudinal et qui comporte un boîtier qui comporte un fond arrière, et à l'intérieur duquel sont agencés :
- au moins une source lumineuse qui est montée fixe dans le boîtier ;
- au moins un réflecteur qui est monté pivotant autour d'un axe transversal par rapport au boîtier.

Certains projecteurs de véhicule automobile sont équipés de moyens de réglage de l'orientation du faisceau lumineux, notamment en site. Ces moyens de réglage ont notamment pour but d'ajuster le faisceau lumineux sur une position angulaire de référence, après le montage du projecteur dans le véhicule.

Il est connu, notamment par le document FR-A-2.757.250, d'effectuer ce réglage en pivotant uniquement le réflecteur, la lampe étant montée de manière fixe dans le fond arrière du boîtier.

Le réflecteur est généralement monté pivotant directement dans le boîtier. Mais le réflecteur peut aussi être fixé dans un berceau. C'est alors le berceau qui est monté pivotant dans le boîtier.

Pour monter le réflecteur pivotant dans le boîtier, il est nécessaire de réaliser des contreparties en saillie ou en creux dans les faces internes des parois latérales internes du boîtier pour recevoir le réflecteur en pivotement.

Le boîtier est généralement réalisé en une seule pièce par moulage. Or, la réalisation par moulage des contreparties en saillie ou en creux dans les parois latérales du boîtier requièrent la mise en oeuvre de techniques de moulage complexes nécessitant l'usage de moules onéreux. En effet, il est nécessaire de prévoir un moule comportant des parties mobiles, aussi appelées "cales", qui doivent être enlevées avant le démoulage du boîtier.

De plus, les solutions existantes présentent un autre inconvénient. En effet, la lampe est montée dans un orifice de montage qui est réalisée dans le fond du boîtier tandis que le réflecteur est monté pivotant sur les parois latérales du boîtier. Pour optimiser l'intensité du faisceau lumineux émis par le projecteur, il est préférable que la lampe soit agencée précisément au foyer du réflecteur. En d'autres termes, l'orifice de montage doit être positionné de manière très précise par rapport aux contreparties pour le pivotement du réflecteur.

La réalisation par moulage de l'orifice de montage et les contreparties avec le boîtier ne permet pas d'en maîtriser précisément la position. Il arrive fréquemment que la position réelle de l'orifice de montage de la lampe par rapport aux contreparties de pivotement du réflecteur soit décalée par rapport à la position nominale requise. Ceci est susceptible d'entraîner un décalage de la position de la lampe par rapport au foyer du réflecteur.

Le document GB 2 170 587 divulgue un projecteur de véhicule automobile avec un boîtier dans lequel est monté pivotant un réflecteur, celui-ci étant monté sur le boîtier par un support intermédiaire qui est fixé au boîtier par des boulons positionnés au-dessus et au-dessous du réflecteur.

Pour résoudre notamment ces problèmes, l'invention propose un projecteur du type décrit précédemment, comportant un élément de support intermédiaire rapporté qui est fixé à l'intérieur du boîtier et sur lequel le réflecteur est monté pivotant.

Selon d'autres caractéristiques de l'invention :
- l'élément de support est positionné dans le boîtier par l'intermédiaire de moyens de positionnement qui sont agencés sur le fond du boîtier ;
- l'élément de support comporte une âme qui est destinée à être positionnée au fond du boîtier et deux flasques latéraux opposés qui sont susceptibles de recevoir le réflecteur en pivotement ;
- l'âme de l'élément de support est positionnée au fond du boîtier par emboîtement de premiers moyens d'emboîtement portés par l'âme dans des deuxièmes moyens d'emboîtement de formes complémentaires qui sont portés par le fond du boîtier ;
- le fond comporte des pions de positionnement d'axe longitudinal qui sont susceptible d'être emboîtés dans des orifices correspondants de l'âme de l'élément de support ;
- l'âme de l'élément de support est fixée contre le fond du boîtier par des moyens de fixation ;
- la source lumineuse est montée dans le boîtier par l'intermédiaire de moyens de montage qui sont portés au moins en partie par l'âme de l'élément de support de manière que la source lumineuse soit positionnée précisément par rapport à l'élément de support ;
- la source lumineuse est une lampe qui comporte des premiers moyens de montage à baïonnette qui coopèrent avec des deuxièmes moyens de montage à baïonnette complémentaires qui sont portés au moins en partie par l'âme de l'élément de support ;
- les deuxièmes moyens de montage à baïonnette comportent un jour réalisé dans l'âme qui est agencé en coïncidence avec une lumière réalisée dans le fond du boîtier, les premiers moyens de montage à baïonnette de la lampe étant susceptibles d'être montés dans le jour en enserrant longitudinalement l'âme de l'élément de support et le fond du boîtier ;
- les moyens de fixation de l'élément de support sont agencés sur le pourtour du jour de l'âme de l'élément de support ;
- l'élément de support est fixé par sertissage au fond du boîtier ;
- l'élément de support comporte un écran thermique qui empêche la chaleur émise par la source lumineuse d'atteindre certaines zones du boîtier ;
- l'élément de support comporte au moins une aile formant écran thermique ;
- le boîtier est réalisé en une seule pièce par moulage ;
- l'élément de support est réalisé en tôle métallique.

D'autres caractéristiques et avantages apparaîtront à la lecture de la description détaillée qui suit pour la compréhension de laquelle on se reportera aux dessins annexés parmi lesquels :
- la figure 1 est une vue en section axiale verticale qui représente un projecteur dans lequel sont montés un réflecteur pivotant et une lampe fixe sur un élément de support selon les enseignements de l'invention ;
- la figure 2 est une vue en section axiale horizontale qui représente le projecteur de la figure 1 ;
- la figure 3 est une vue en perspective qui représente l'élément de support de la figure 1.

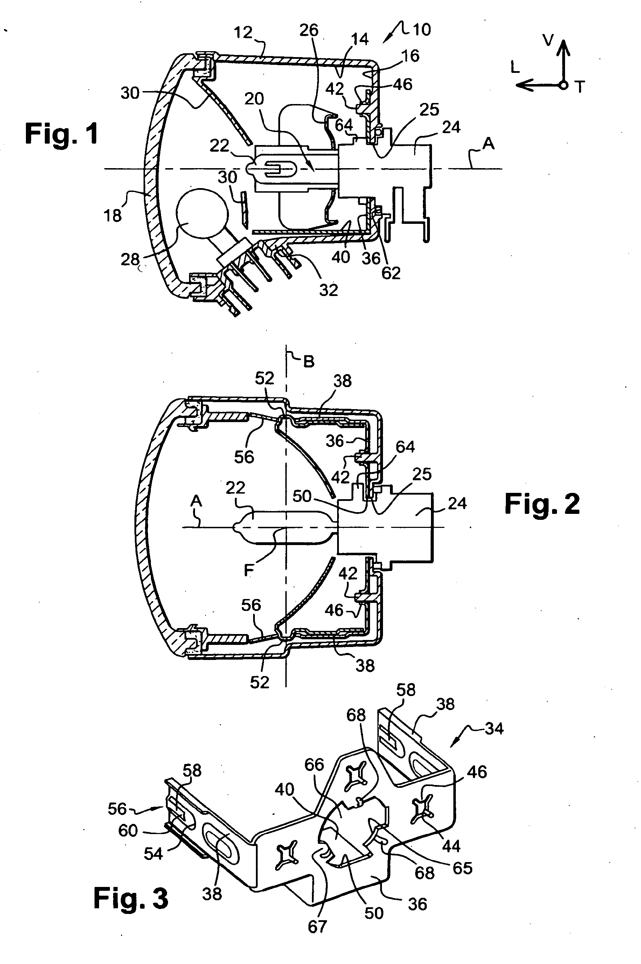

Pour la suite de la description, on adoptera à titre non limitatif des orientations longitudinale dirigée d'arrière en avant, verticale dirigée de bas en haut et transversale, qui sont indiquées par le trièdre "L,V,T" de la figure 1.

Par la suite, des éléments identiques, analogues ou similaires seront indiqués par des mêmes numéros de référence.

On a représenté à la figure 1 un projecteur 10 de véhicule automobile. Il s'agit ici d'un projecteur 10 qui est agencé à l'avant du véhicule automobile.

Le projecteur 10 comporte un boîtier 12 de forme globalement cylindrique d'axe longitudinal "A". Le boîtier 12 comporte une paroi latérale cylindrique 14 et un fond transversal vertical arrière 16. Le boîtier 12 est fermé de façon étanche vers l'avant par une vitre frontale de protection 18 qui s'étend dans un plan transversal vertical.

Le boîtier 12 est ici réalisé en une seule pièce par moulage, par exemple en matériau plastique.

Le projecteur 10 est susceptible d'émettre au moins un faisceau lumineux globalement selon l'axe "A" longitudinal.

Le boîtier 12 comporte ici deux ensembles optiques qui sont susceptibles de remplir deux fonctions d'éclairage différentes. Par exemple, le premier ensemble optique rempli une fonction de "feu anti-brouillard", tandis que le deuxième ensemble optique rempli une fonction de "feu de jour".

Le premier ensemble optique comporte une première source lumineuse qui est ici une lampe halogène 20. La lampe halogène comporte une ampoule avant 22 et un culot arrière 24.

Le culot 24 comporte un corps cylindrique de révolution d'axe longitudinal. Le culot 24 est fixé au fond 16 du boîtier 12. Plus particulièrement, le fond 16 du boîtier 12 est ajouré d'une lumière 25 dans laquelle le culot 24 est fixé par des moyens de montage à baïonnette qui seront décrit plus en détail par la suite. Le culot 24 comporte ainsi un tronçon avant qui est agencé à l'intérieur du boîtier 12, et un tronçon arrière qui est agencé à l'extérieur du boîtier 12. Le tronçon arrière du culot comporte notamment des moyens de connexion électrique.

Le premier ensemble optique comporte aussi un premier réflecteur 26 qui est monté pivotant dans le boîtier 12 autour d'un axe transversal "B", comme représenté à la figure 2.

Selon une variante non représentée de l'invention, le premier réflecteur 26 est fixé sur un berceau, et le berceau est monté pivotant dans le boîtier 12.

Le premier réflecteur 26 comporte une face interne concave réfléchissante globalement paraboloïde qui comporte un axe optique globalement longitudinal "O" qui est sécant avec l'axe de pivotement "B". Dans l'exemple représenté aux figures 1 et 2, l'axe optique "O" est confondu avec l'axe "A" du boîtier 12.

Comme illustré à la figure 2, un foyer optique "F" du premier réflecteur 26 est agencé sur l'axe optique "O". Le foyer "F" est plus particulièrement agencé au croisement de l'axe optique "O" et de l'axe de pivotement "B".

Le bulbe 22 de la lampe halogène 20 est agencé au foyer optique "F" du premier réflecteur 26 de manière que les rayons émis par la lampe 20 en direction du premier réflecteur 26 soient réfléchis selon la direction de l'axe optique "O".

Le premier réflecteur 26 étant monté pivotant dans le boîtier 12, l'axe optique "O" du projecteur 10 est susceptible d'occuper plusieurs positions angulaires de part et d'autre de l'axe longitudinal "A" du boîtier 12.

Comme représenté à la figure 1, le deuxième ensemble optique du projecteur 10 comporte une deuxième source lumineuse qui est ici une lampe à incandescence 28 et un deuxième réflecteur 30 fixe par rapport au boîtier 12 qui est agencé à l'avant du premier réflecteur 26 pivotant. Le deuxième réflecteur 30 comporte un orifice central de passage du faisceau lumineux émis par le premier ensemble optique. La lampe à incandescence 28 est ici agencée dans une portion inférieure 32 de la paroi latérale 14 du boîtier 12.

Ce deuxième ensemble optique n'est pas indispensable pour la mise en oeuvre de l'invention, il ne sera donc pas décrit plus en détail dans la suite de la description.

Pour simplifier la compréhension de la suite de la description, les termes "lampe" et "réflecteur" se rapporteront uniquement à la première source lumineuse 20 et au premier réflecteur 26.

Selon une variante de l'invention, le boîtier 12 ne comporte qu'un unique ensemble optique similaire ou identique au premier ensemble optique décrit précédemment.

Selon les enseignements de l'invention, le projecteur 10 comporte un élément intermédiaire de support 34 rapporté qui est monté de manière fixe dans le boîtier 12. Le réflecteur 26 est monté pivotant sur l'élément de support 34.

L'élément de support 34 est représenté plus en détail à la figure 3. Il comporte une âme centrale arrière 36 qui s'étend dans un plan transversal vertical. Deux flasques latéraux 38 s'étendent vers l'avant dans un plan longitudinal vertical depuis les deux bords d'extrémité transversale de l'âme 36. Les deux flasques 38 sont légèrement divergents afin de permettre l'assemblage des différents éléments composant le projecteur.

Une aile 40 inférieure horizontale s'étend vers l'avant depuis un bord d'extrémité inférieur de l'âme 36.

L'élément de support 34 est ici réalisé en une seule pièce en tôle métallique découpée et pliée.

Comme représenté aux figures 1 et 2, l'âme 36 de l'élément de support 12 est agencée contre la face interne du fond 16 du boîtier 12, de manière que les flasques 38 s'étendent le long des parois latérales 14 du boîtier 12. Les flasques 38 ne sont pas nécessairement au contact des parois latérales 14 du boîtier 12.

Le projecteur 10 comporte des moyens de positionnement de l'élément de support 34 contre le fond 16 du boîtier 12. A cet effet, le fond du boîtier 12 comporte ici trois pions de positionnement 42 qui s'étendent longitudinalement vers l'avant depuis la face interne du fond 16 du boîtier 12. Les pions de positionnement 42 ne sont pas alignés.

L'âme 36 de l'élément de support 34 comporte des orifices de positionnement 44 qui sont agencés en concordance avec les pions de positionnement 42 de manière que les pions de positionnement 42 puissent être insérés dans les orifices de positionnement 44.

Comme représenté à la figure 3, les orifices de positionnement 44 de l'âme 36 présentent des ergots élastiques 46 flexibles qui s'étendent radialement depuis la périphérie des orifices 44 vers leur centre dans le même plan que l'âme 36. Ces ergots 46 sont ici au nombre de quatre par orifice de positionnement 44 et ils sont répartis régulièrement autour de chaque orifice de positionnement 44.

Les ergots 46 sont agencés de manière que, lorsque le pion de positionnement 42 est inséré longitudinalement dans l'orifice de positionnement 44 associé, l'extrémité libre des ergots 46 est poussée vers l'avant, provoquant ainsi la flexion des ergots 46. Les ergots 46 étant rappelés élastiquement vers leur position initiale, ils pincent le pion 42 comme représenté aux figures 1 et 2. Le pion 42 est ainsi centré dans l'orifice de positionnement 44.

De plus, le pincement des ergots 46 sur le pion 42 permet d'offrir une résistance à un mouvement longitudinal vers l'avant de l'élément de support 34 par rapport au boîtier 12 lorsque l'élément de support 34 est positionné dans le boîtier 12. L'élément de support 34 est ainsi maintenu en position jusqu'à sa fixation sur le boîtier 12.

Pour permettre le montage en pivotement du réflecteur 26 sur l'élément de support 34, le réflecteur 26 comporte des tourillons latéraux 52 qui sont agencés transversalement de part et d'autre du réflecteur 26 de manière coaxiale à l'axe de pivotement "B". Chaque flasque 38 de l'élément de support 34 portent un palier 54 d'axe de pivotement "B". Les paliers 54 sont ici formés par des trous qui traversent les flasques 38. Les paliers 54 sont agencés en vis-à-vis l'un de l'autre de manière à recevoir en pivotement les tourillons 52.

Le réflecteur 26 est monté entre les flasques 38 de l'élément de support 34 par des moyens d'emboîtement élastique de formes complémentaires. Ainsi, l'extrémité avant libre de chaque flasque 38 comporte une rainure longitudinale dont le fond arrière délimite vers l'arrière le palier 54. Une lamelle élastique flexible 56 est monté dans la rainure de manière que l'extrémité avant 58 de chaque lamelle 56 soit liée par une liaison du type encastrement au flasque 38 associé, tandis que l'extrémité arrière 60 de la lamelle 56 est libre. L'extrémité arrière 60 de la lamelle 56 délimite vers l'avant le palier 54 du flasque 38.

Les lamelles 56 sont montées de manière inclinée par rapport à la direction longitudinale "A". Ainsi, les extrémités avant 58 des lamelles 56 sont éloignées transversalement l'une de l'autre d'une distance qui est au moins égale à la distance qui sépare transversalement les extrémités libres des tourillons 52 du réflecteur 26. De plus, les extrémités arrière 60 des deux lamelles 56 sont éloignées transversalement d'une distance qui est inférieure à la distance qui sépare transversalement les extrémités libres des tourillons 52 du réflecteur 26.

Lors du montage du réflecteur 26, les lamelles 56 forment ainsi des rampes qui permettent de guider les tourillons 52 du réflecteur 26 jusqu'aux paliers 54 selon un mouvement de coulissement longitudinal vers l'arrière. Lors de cette opération, les lamelles 56 se déforment alors élastiquement en flexion dans un plan horizontale de manière que leurs extrémités arrière s'éloignent l'une de l'autre pour permettre le passage des tourillons 52. Puis, lorsque les tourillons 52 sont insérés dans les paliers 54, les lamelles sont rappelées élastiquement vers leur position d'origine, emprisonnant ainsi le réflecteur 26 dans les paliers 54.

Selon un autre aspect de l'invention, le culot 24 est monté de manière fixe au fond 16 du boîtier 12 par l'intermédiaire de moyens de montage qui sont portés au moins en partie par l'âme 36 de l'élément de support 34 de manière que l'ampoule 22 soit positionnée précisément par rapport à l'élément de support 34, et, par conséquent, par rapport au réflecteur 26.

Le culot 24 est monté par des moyens de montage à baïonnette. A cet effet, le culot 24 porte des premiers moyens de montage à baïonnette qui sont susceptibles de coopérer avec des deuxièmes moyens de montage à baïonnette qui sont portés par le boîtier 12 et par l'élément de support 34.

Ainsi, les premiers moyens de montage à baïonnette du culot 24 comportent une collerette radiale 62 qui porte une face d'épaulement qui est orientée axialement vers l'avant. Le culot 24 comporte aussi trois doigts 64 qui s'étendent radialement vers l'extérieur depuis le corps du culot 24. Les doigts 64 sont ici au nombre de trois et ils sont répartis régulièrement sur le pourtour du culot 24. Les doigts 64 sont agencés à l'avant de la face d'épaulement 62 de manière qu'une face arrière des doigts soit agencée en vis-à-vis de la face d'épaulement 62. Les doigts 64 sont séparés de la face d'épaulement 62 d'une distance longitudinale qui est sensiblement égale à la somme des épaisseurs du fond 16 et de l'âme 36.

Les deuxièmes moyens de montage à baïonnette sont portés d'une part par le fond 16 du boîtier 12, et d'autre part par l'âme 36 de l'élément de support 34.

Ainsi, le contour de la lumière 25 du fond 16 du boîtier 12 a une forme circulaire de diamètre légèrement supérieur au diamètre du corps cylindrique du culot 24 mais inférieur au diamètre de la face d'épaulement 62. La lumière 25 comporte en outre trois échancrures (non représentées) qui sont agencées en concordance avec les doigts 64 pour permettre le passage des doigts 64 lorsque le culot 24 est introduit longitudinalement d'arrière en avant dans la lumière 25. Les échancrures délimitent ainsi trois languettes (non représentées) qui s'étendent radialement vers l'intérieur de la lumière 25 en alternance avec les échancrures autour de la lumière 25.

L'âme 36 comporte un jour 50 qui est agencé en concordance avec la lumière 25 du boîtier 12. Le jour 50 permet le passage du culot 24. Le contour du jour 50 de l'élément de support 34 a une forme similaire à celle du contour de la lumière 25. Ainsi, le jour 50 comporte aussi un contour de forme circulaire 65 comportant trois échancrures 66 pour permettre le passage des doigts 64, et trois languettes 67 qui s'étendent radialement vers l'intérieur du jour 50 en alternance avec les échancrures 66. L'extrémité libre des languettes 67 forme ainsi le contour circulaire 65 du jour 50. Les échancrures 66 du jour 50 sont agencées en concordance avec les échancrures de la lumière 25 du fond 16.

Cependant, le diamètre du contour circulaire 65 du jour 50 est légèrement inférieur au diamètre interne de la lumière 25. Le diamètre interne du jour 50 est sensiblement égal au diamètre du corps cylindrique du culot 24. Ainsi, une extrémité libre intérieure des languettes 67 de l'élément de support 34 fait saillie dans la lumière 25 du boîtier 12 par rapport aux languettes du fond 16 lorsque l'élément de support 34 est agencé dans le boîtier 12.

De plus, la face avant de l'âme 36 comporte des butées angulaires (non représentées) qui sont destinées à coopérer avec les doigts 64 afin de bloquer la rotation du culot 24 par rapport au boîtier 12 autour d'un axe longitudinal lorsque le culot 24 est en position angulaire montée sur le boîtier 12. La face avant de l'âme 36 comporte en outre des bossages (non représentés) pour verrouiller le culot 24 dans sa position angulaire montée.

Selon une variante non représentée de l'invention, les moyens de montage à baïonnette sont portés uniquement par l'élément de support 34.

Par ailleurs, l'élément de support 34 est fixé au fond du boîtier 12. L'élément de support 34 est avantageusement fixé sur le pourtour de la lumière 25 de passage du culot 24.

Des pattes de sertissage 68, qui sont ici au nombre de trois, s'étendent radialement vers l'intérieur depuis le pourtour du jour 50. Les pattes de sertissage 68 s'étendent plus particulièrement depuis l'extrémité libre des languettes 67 du jour 50. Les pattes de sertissage 68 sont destinées à être rabattues à travers la lumière 25 du boîtier 12 contre la face externe du fond 16. Les pattes de sertissage 68 agrippent ainsi l'extrémité libre des languettes du fond 16 du boîtier 12 de manière à assurer la fixation de l'élément de support 34 sur le boîtier 12.

Lors du montage du projecteur 10, l'élément de support 34 est tout d'abord positionné dans le boîtier 12. L'élément de support 34 est inséré selon une direction longitudinale vers l'arrière jusqu'à ce que l'âme 36 soit plaquée contre le fond 16. Pendant cette opération, les pions de positionnement 42 sont alors insérés dans les orifices 44. L'extrémité libre des ergots 46 est poussée longitudinalement vers l'avant par les pions de positionnement 42 ce qui provoque la flexion des ergots 46. Les pions 42 sont ainsi pincés par les ergots 46 de manière que les pions 42 soient centrés dans les orifices 44, et de manière que l'élément de support 34 soit maintenu en position dans le boîtier 12.

Puis l'élément de support 34 est fixé dans le boîtier 12 en repliant les pattes de sertissage vers l'arrière de manière à agripper le bord de la lumière 25 du boîtier 12.

L'élément de support 34 est ainsi immobilisé longitudinalement par rapport au boîtier 12 par les pattes de sertissage 68, et il est immobilisé en rotation autour de l'axe longitudinal par les pions de positionnement 42.

Ensuite, le réflecteur 26 est monté sur l'élément de support 34. Le réflecteur 26 est inséré par l'ouverture avant du boîtier 12 selon un déplacement longitudinal vers l'arrière de manière que les tourillons 52 soient engagés dans les rainures avant des flasques 38, entre les deux lamelles 56. Les lamelles 56 sont fléchies par le passage des tourillons, puis lorsque les tourillons sont logés dans les paliers 54, les lamelles sont rappelées élastiquement dans leur position d'origine de manière à emprisonner les tourillons 52 dans les paliers 54.

Puis, le culot 24, préalablement équipé de la lampe 28 est alors monté dans le boîtier 12. A cet effet, le culot est agencé à l'arrière du boîtier 12, en vis-à-vis de la lumière 25, dans une position angulaire telle que les doigts 64 sont en concordance avec les encoches.

La lampe, puis un premier tronçon avant du culot 24 sont insérés longitudinalement d'arrière en avant à l'intérieur du boîtier 12 par l'intermédiaire de la lumière 25 et du jour 50 jusqu'à ce que la face d'épaulement 62 soit en butée contre la face externe du fond 16 du boîtier 12. Pour permettre cette insertion, le culot 24 a été orienté dans une position angulaire autour de son axe longitudinal de manière que les doigts 64 coïncident avec les encoches 66. Les doigts 64 sont alors agencés à l'intérieur du boîtier 12.

Puis, le culot 24 est tourné autour de son axe longitudinal de manière que les doigts 64 s'engagent devant les languettes 67 de l'âme 36 jusqu'à ce que les doigts soient en butée. Les languettes de l'âme 36 et du boîtier 12 sont ainsi enserrées axialement entre les doigts 64 d'une part et la face d'épaulement 62 d'autre part.

Au cours du mouvement de rotation du culot 24, les doigts 64 franchissent les bossages de l'âme 36 en se déformant élastiquement de manière à maintenir le culot 24 en butée angulaire.

D'autre part, l'extrémité libre des languettes 67 de l'âme 36 faisant saillie dans la lumière 25 du boîtier 12, le corps cylindrique du culot 24 est en appui sur l'extrémité libre 65 des languettes 67 de l'âme 36. Ainsi, le culot 24 est positionné dans un plan longitudinal vertical dans le boîtier 12 en prenant pour référence l'élément de support 34.

De plus, le culot 24 est aussi positionné longitudinalement par rapport à l'élément de support 34 par les doigts 64 qui sont en appui longitudinal contre la face avant de l'âme 36

La lampe 24 et le réflecteur 26 sont donc tous les deux positionnés par rapport à l'élément de support 34. L'élément de support 34 étant fabriqué en tôle par la mise en oeuvre de procédés connus et maîtrisé, par exemple par pliage et découpage, permet d'obtenir des dimensions fiables avec un très faible intervalle de tolérance. Par conséquent, le culot 24 est toujours bien positionné par rapport au réflecteur 26, indépendamment des dispersions constatées dans les dimensions du boîtier 12 obtenu par moulage.

De plus, grâce à l'élément de support 34, il n'est plus nécessaire de prévoir des formes complexes pour les parois latérales internes du boîtier 12 lors du moulage. En effet, l'élément de support 34 est positionné et fixé au fond 16 du boîtier 12. Or, il est aisé de réaliser les pions de positionnement 42 du boîtier 12 au moyen d'un moule simple.

En outre, la fixation de l'élément de support 34 sur la lumière 25 du boîtier 12 permet avantageusement d'immobiliser parfaitement le jour 50 par rapport à la lumière 25pour faciliter le montage du culot 24 dans le jour 50 et la lumière 25.

Par ailleurs, l'aile 40 de l'élément de support 34 est intercalé entre une portion inférieure de la paroi latérale 14 du boîtier 12 et le bulbe 22 de la lampe 20. L'aile 40 forme ainsi un écran thermique qui empêche la chaleur émise par la lampe 20 de chauffer certaines parties du boîtier 12.

## Revendications

1. Projecteur (10) de véhicule automobile qui est susceptible d'émettre au moins un faisceau lumineux selon un axe globalement longitudinal (A) et qui comporte un boîtier (12) qui comporte un fond arrière (16), et à l'intérieur duquel sont agencés :
- au moins une source lumineuse (20) qui est montée fixe dans le boîtier (12) ;
- au moins un réflecteur (26) qui est monté pivotant autour d'un axe transversal (B) par rapport au boîtier (12) ;
comportant un élément de support (34) intermédiaire rapporté qui est fixé à l'intérieur du boîtier (12) et sur lequel le réflecteur (20) est monté pivotant, l'élément de support (34) étant positionné dans le boîtier (12) par l'intermédiaire de moyens de positionnement (42) qui sont agencés sur le fond (16) du boîtier (12), **caractérisé**
**en ce que** l'élément de support (34) comporte une âme (36) qui est destinée à être positionnée au fond (16) du boîtier (12) et deux flasques (38) latéraux opposés qui sont susceptibles de recevoir le réflecteur (20) en pivotement.

2. Projecteur (10) selon la revendication précédente, **caractérisé en ce que** l'âme (36) de l'élément de support (34) est positionnée au fond (16) du boîtier (12) par emboîtement de premiers moyens d'emboîtement (44, 46) portés par l'âme (36) dans des deuxièmes moyens d'emboîtement (42) de formes complémentaires qui sont portés par le fond (16) du boîtier (12).

3. Projecteur (10) selon la revendication précédente, **caractérisé en ce que** le fond (16) comporte des pions de positionnement (42) d'axe longitudinal qui sont susceptible d'être emboîtés dans des orifices (44) correspondants de l'âme (36) de l'élément de support (34).

4. Projecteur (10) selon l'une quelconque des revendications 1 à 3, **caractérisé en ce que** l'âme (36) de l'élément de support (34) est fixée contre le fond (16) du boîtier (12) par des moyens de fixation (68).

5. Projecteur (10) selon la revendication précédente, **caractérisé en ce que** la source lumineuse (20) est montée dans le boîtier (12) par l'intermédiaire de moyens de montage (25, 50) qui sont portés au moins en partie par l'âme (36) de l'élément de support (34) de manière que la source lumineuse (20) soit positionnée précisément par rapport à l'élément de support (34).

6. Projecteur (10) selon l'une quelconque des revendications précédentes, **caractérisé en ce que** la source lumineuse (20) est une lampe qui comporte des premiers moyens de montage à baïonnette (62, 64) qui coopèrent avec des deuxièmes moyens de montage à baïonnette (25, 50) complémentaires qui sont portés au moins en partie par l'âme (36) de l'élément de support (34).

7. Projecteur (10) selon la revendication précédente, **caractérisé en ce que** les deuxièmes moyens de montage à baïonnette comportent un jour (50) réalisé dans l'âme (36) qui est agencé en coïncidence avec une lumière (25) réalisée dans le fond (16) du boîtier (12), les premiers moyens de montage à baïonnette (62, 64) de la lampe (20) étant susceptibles d'être montés dans le jour (50) en enserrant longitudinalement l'âme (36) de l'élément de support (34) et le fond (16) du boîtier (12).

8. Projecteur (10) selon la revendication précédente prise en combinaison avec la revendication 6, **caractérisé en ce que** les moyens de fixation (68) de l'élément de support (34) sont agencés sur le pourtour (65) du jour (50) de l'âme (36) de l'élément de support (34).

9. Projecteur (10) selon la revendication précédente, **caractérisé en ce que** l'élément de support (34) est fixé par sertissage au fond (16) du boîtier (12).

10. Projecteur (10) selon l'une quelconque des revendications précédentes, **caractérisé en ce que** l'élément de support (34) comporte un écran thermique (40) qui empêche la chaleur émise par la source lumineuse (20) d'atteindre certaines zones du boîtier (12).

11. Projecteur (10) selon l'une quelconque des revendications précédentes, **caractérisé en ce que** l'élément de support (34) comporte au moins une aile (40) formant écran thermique.

12. Projecteur (10) selon l'une quelconque des revendications précédentes, **caractérisé en ce que** le boîtier (12) est réalisé en une seule pièce par moulage.

13. Projecteur (10) selon l'une quelconque des revendications précédentes, **caractérisé en ce que** l'élément de support (34) est réalisé en tôle métallique.

## Claims

1. Headlight (10) for a motor vehicle which can emit at least one light beam according to a globally longitudinal axis (A), and which comprises a housing (12) which comprises a rear base (16), and inside which there are arranged:
- at least one source of light (20) which is fitted secured in the housing (12);
- at least one reflector (26) which is fitted such as to pivot around an axis (B) which is transverse relative to the housing (12);
comprising an added-on intermediate support element (34) which is secured to the interior of the housing (12), and onto which the reflector (20) is fitted such as to pivot, the support element (34) being positioned in the housing (12) by means of positioning means (42) which are arranged on the base (16) of the housing (12), **characterised in that** the support element (34) comprises a core (36) which is designed to be positioned on the base (16) of the housing (12) and two opposite lateral flanges (38) which can receive the reflector (20) by pivoting.

2. Headlight (10) according to the preceding claim, **characterised in that** the core (36) of the support element (34) is positioned on the base (16) of the housing (12) by fitting of first fitting means (44, 46) which are supported by the core (36) into second fitting means (42) with complementary forms which are supported by the base (16) of the housing (12).

3. Headlight (10) according to the preceding claim, **characterised in that** the base (16) comprises positioning pins (42) with a longitudinal axis which can be fitted in corresponding apertures (44) in the core (36) of the support element (34).

4. Headlight (10) according to any one of claims 1 to 3, **characterised in that** the core (36) of the support element (34) is secured against the base (16) of the housing (12) by securing means (68).

5. Headlight (10) according to the preceding claim, **characterised in that** the source of light (20) is fitted in the housing (12) by means of fitting means (25, 50) which are supported at least partly by the core (36) of the support element (34), such that the source of light (20) is positioned accurately relative to the support element (34).

6. Headlight (10) according to any one of the preceding claims, **characterised in that** the source of light (20) is a lamp which comprises first bayonet fitting means (62, 64) which co-operate with second, complementary bayonet fitting means (25, 50) which are supported at least partly by the core (36) of the support element (34).

7. Headlight (10) according to the preceding claim, **characterised in that** the second bayonet fitting means comprise an opening (50) provided in the core (36) which is arranged such as to coincide with an aperture (25) provided in the base (16) of the housing (12), the first bayonet fitting means (62, 64) of the lamp (20) being able to be fitted in the opening (50), whilst enclosing longitudinally the core (36) of the support element (34) and the base (16) of the housing (12).

8. Headlight (10) according to the preceding claim, taken in combination with claim 6, **characterised in that** the securing means (68) of the support element (34) are arranged on the periphery (65) of the opening (50) in the core (36) of the support element (34).

9. Headlight (10) according to the preceding claim, **characterised in that** the support element (34) is secured by being crimped on the base (16) of the housing (12).

10. Headlight (10) according to any one of the preceding claims, **characterised in that** the support element (34) comprises a thermal screen (40) which prevents the heat emitted by the source of light (20) from reaching certain areas of the housing (12).

11. Headlight (10) according to any one of the preceding claims, **characterised in that** the support element (34) comprises at least one wing (40) which forms a thermal screen.

12. Headlight (10) according to any one of the preceding claims, **characterised in that** the housing (12) is made in a single piece by moulding.

13. Headlight (10) according to any one of the preceding claims, **characterised in that** the support element (34) is made of metal plate.

## Patentansprüche

1. Kraftfahrzeugscheinwerfer (10), der wenigstens ein Lichtbündel entlang einer allgemein in Längsrichtung verlaufenden Achse (A) abzugeben vermag und der ein Gehäuse (12) umfasst, das einen rückwärtigen Boden (16) aufweist und in dem angeordnet sind:
- wenigstens eine Lichtquelle (20), die im Gehäuse (12) feststehend montiert ist;
- wenigstens ein Reflektor (26), der bezüglich des Gehäuses (12) um eine Querachse (B) schwenkbar montiert ist;
der ein angesetztes Zwischenträgerelement (34) umfasst, das innen im Gehäuse (12) befestigt ist und auf dem der Reflektor (26) schwenkbar montiert ist, wobei das Trägerelement (34) im Gehäuse (12) mit Hilfe von Positionierungsmitteln (42), die auf dem Boden (16) des Gehäuses (12) angeordnet sind, positioniert ist,
**dadurch gekennzeichnet, dass** das Trägerelement (34) einen Mittelteil (36) aufweist, der zur Platzierung am Boden (16) des Gehäuses (12) bestimmt ist, sowie zwei sich gegenüberliegende Seitenwangen (38), die den Reflektor (26) schwenkbar aufzunehmen vermögen.

2. Scheinwerfer (10) nach dem vorhergehenden Anspruch,
**dadurch gekennzeichnet, dass** der Mittelteil (36) des Trägerelements (34) am Boden (16) des Gehäuses (12) durch Einstecken erster, am Mittelteil (36) befindlicher Steckverbindungsmittel (44, 46) in zweite komplementär geformte Steckverbindungsmittel (42), die sich am Boden (16) des Gehäuses (12) befinden, platziert wird.

3. Scheinwerfer (10) nach dem vorhergehenden Anspruch,
**dadurch gekennzeichnet, dass** der Boden (16) Positionierstifte (42) mit einer Längsachse aufweist, die in entsprechende Öffnungen (44) des Mittelteils (36) des Trägerelements (34) einsteckbar sind.

4. Scheinwerfer (10) nach einem der Ansprüche 1 bis 3,
**dadurch gekennzeichnet, dass** der Mittelteil (36) des Trägerelements (34) durch Befestigungsmittel (68) am Boden (16) des Gehäuses (12) befestigt ist.

5. Scheinwerfer (10) nach dem vorhergehenden Anspruch,
**dadurch gekennzeichnet, dass** die Lichtquelle (20) im Gehäuse (12) mit Hilfe von Montagemitteln (25, 50) angebracht ist, die sich wenigstens zum Teil am Mittelteil (36) des Trägerelements (34) befinden, so dass die Lichtquelle (20) bezüglich des Trägerelements (34) genau positioniert ist.

6. Scheinwerfer (10) nach einem der vorhergehenden Ansprüche,
**dadurch gekennzeichnet, dass** die Lichtquelle (20) eine Lampe ist, die erste Bajonettmontagemittel (62, 64) aufweist, die mit zweiten, komplementären Bajonettmontagemitteln (25, 50) zusammenwirken, die sich wenigstens zum Teil am Mittelteil (36) des Trägerelements (34) befinden.

7. Scheinwerfer (10) nach dem vorhergehenden Anspruch,
**dadurch gekennzeichnet, dass** die zweiten Bajonettmontagemittel eine im Mittelteil (36) ausgebildete Öffnung (50) aufweisen, die in Übereinstimmung mit einem im Boden (16) des Gehäuses (12) ausgeführten Schlitz (25) ausgebildet ist, wobei die ersten Bajonettmontagemittel (62, 64) der Lampe (20) in der Öffnung (50) anbringbar sind und hierbei in Längsrichtung den Mittelteil (36) des Trägerelements (34) und den Boden (16) des Gehäuses (12) umschließen.

8. Scheinwerfer (10) nach dem vorhergehenden Anspruch in Verbindung mit Anspruch 6,
**dadurch gekennzeichnet, dass** die Befestigungsmittel (68) des Trägerelements (34) an der Umrandung (65) der Öffnung (50) des Mittelteils (36) des Trägerelements (34) angeordnet sind.

9. Scheinwerfer (10) nach dem vorhergehenden Anspruch,
**dadurch gekennzeichnet, dass** das Trägerelement (34) durch Crimpen am Boden (16) des Gehäuses (12) befestigt ist.

10. Scheinwerfer (10) nach einem der vorhergehenden Ansprüche,
**dadurch gekennzeichnet, dass** das Trägerelement (34) einen Wärmeschild (40) aufweist, der verhindert, dass die von der Lichtquelle (20) abgegebene Wärme bestimmte Bereiche des Gehäuses (12) erreicht.

11. Scheinwerfer (10) nach einem der vorhergehenden Ansprüche,
**dadurch gekennzeichnet, dass** das Trägerelement (34) wenigstens einen einen Wärmeschild bildenden Flügel (40) aufweist.

12. Scheinwerfer (10) nach einem der vorhergehenden Ansprüche,
**dadurch gekennzeichnet, dass** das Gehäuse (12) in einem Stück durch Formgießen ausgeführt ist.

13. Scheinwerfer (10) nach einem der vorhergehenden Ansprüche,
**dadurch gekennzeichnet, dass** das Trägerelement (34) aus Metallblech ausgeführt ist.
